# EUROPEAN PATENT APPLICATION

(11) **EP 4 388 890 A1**
(43) Date of publication of application: **26.06.2024**
(21) Application number: 22858713.5
(22) Date of filing: 16.08.2022
(51) Int. Cl.: A23L 17/60, A23L 29/30, A23L 5/10, A23L 7/00, A23L 17/00, A23L 25/00

(54) **LAVER SNACK HAVING WAVE SHAPE AND PREPARING METHOD THEREOF**

(30) Priority: 17.08.2021 KR 20210108104
(71) Applicant: CJ CheilJedang Corporation, Seoul 04560 (KR)
(72) Inventor: KIM, Hoo Sik, Seoul 04560 (KR); PARK, Hong Wook, Seoul 04560 (KR)
(74) Representative: Bandpay & Greuter
(86) International application number: PCT/KR2022/012199
(87) International publication number: WO 2023/022476

(57) **Abstract**

The present application relates to a laver snack having a wave shape and a preparation method thereof. According to the present application, when heat treating by grilling the laver, the laver is puffed by the moisture contained in a sugar solution applied to the laver sheet to form a wave shape on the laver surface, thereby providing a laver snack with a crunchy texture.

## Description

### [Technical Field]

The present application relates to a laver snack having a wave shape and a preparation method thereof.

### [Background Art]

Laver is rich in soluble fiber, protein, peptides, vitamins, lipids, and minerals, and contains ingredients that excrete cholesterol out of the body, so eating laver can prevent hypertension, arteriosclerosis, dyslipidemia, and oxidative stress, and prevent blood coagulation, helping to keep the cardiovascular system healthy. In addition, it has been reported that the dietary fiber contained in the laver can prevent the development of stomach cancer, and the laver is known to prevent dementia and constipation, and is also effective in protecting the eyesight.

Recently, as the nutritional benefits of laver have become known, laver snacks are attracting attention around the world. In China and Japan, including Korea, the laver is spread with sesame oil or perilla oil and grilled to eat, or made into salted dry laver or laver chips to eat, and laver snacks in various forms of seasoned laver are being sold. In the West countries such as the United States, etc., as the perception on the laver, as a healthy snack compared to traditional snacks made with flour, is spread, a high sales growth rate thereof is recorded. Laver snacks are prepared and sold as snacks having not only salty flavors but also sweet, spicy, barbecue, lime, and onion flavors according to the tastes of Westerners, and are characterized by a variety of flavors and crunchiness.

Korean Laid-open Patent Publication No. 10-2021-0065067 discloses a laver snack with excellent sensory properties such as taste, flavor, texture, etc., and an excellent product shape, and a preparation method thereof. Korean Laid-open Patent Publication No. 10-2019-0103572 discloses a block type laver snack that is easy to eat in one bite, and does not break easily and thus has advantage when packaging it, and a preparation method thereof. Korean Laid-open Patent Publication No. 10-2017-0016077 discloses a laver snack using salted dry laver, which has unique taste and crunchy texture of laver, and a preparation method thereof.

The laver snacks have recently attracted attention around the world, but there is a need to prepare laver snacks according to the texture of various races, and the there is a need to develop laver snacks capable of being eaten with a crispier texture by consumers according to the demand for laver snacks that have continuously increased.

### [Prior Art Documents]

### [Patent Documents]

Korean Laid-open Patent Publication No. 10-2021-0065067
Korean Laid-open Patent Publication No. 10-2019-0103572
Korean Laid-open Patent Publication No. 10-2017-0016077

### [Disclosure]

### [Technical Problem]

The present inventors conducted research and efforts to prepare laver snacks capable of giving a crunchy texture using laver. As a result, the present inventors have confirmed that laver is applied with a sugar solution containing moisture and then induced for puffing by grilling heat treatment, thereby preparing a laver snack having a wave shape and a crunchy texture, and then completed the present invention.

Therefore, it is an object of the present application to provide a laver sheet having a wave shape.

It is another object of the present application to provide a laver snack having a wave shape.

It is yet another object of the present application to provide a preparation method of a laver snack having a wave shape.

### [Technical Solution]

In order to achieve the above objects,
one aspect of the present application provides a laver sheet applied with sugar solution, the laver sheet having the thickness of 2 mm or more, the peak force of 500 or more, the peak time of 2 seconds or more, and a wave shape.

Another aspect of the present application provides a laver snack including two laver sheets applied with sugar solution and a filling material containing solids between the two laver sheets applied with a sugar solution, the laver snack having the thickness of 2 mm or more, the peak force of 500 or more, the peak time of 2 seconds or more, and a wave shape.

Yet another aspect of the present application provides a preparation method of a laver snack including: adding a filling material containing solids between two laver sheets applied with a sugar solution; and heat treating by grilling the two laver sheets including the filling material, wherein the grilling distance is 1.5 mm to 5 mm.

Hereinafter, the present application will be described in detail.

### Wavy laver sheet

According to one aspect of the present application, there is provided a laver sheet applied with a sugar solution, the laver sheet having the thickness of 0.4 mm to 4 mm, the peak force of 500 or more, the peak time of 3 seconds or more, and a wave shape.

The laver sheet having the wave shape of the present application is also referred to and described as a "wavy laver sheet" in this specification.

The wavy laver sheet of the present application is thicker, and curved rather than flat, which are characteristics that conventional laver sheets do not have and have not been attempted, and has a crunchy texture, a new texture that laver sheets do not have.

The sugar contained in the sugar solution applied to the wavy laver sheet of the present application may be any food-acceptable sugar, and may be oligosaccharides, polysaccharides, disaccharides, or monosaccharides. Specifically, the sugar included in the sugar solution may be sucrose, starch syrup, oligosaccharide, fructooligosaccharide, sorbitol, maltitol, polyglycitol, maltose, or stevioside.

In one embodiment, the Brix of the sugar solution may be 40 to 80 brix.

Specifically, the Brix of the sugar solution may be in a range consisting of any one lower limit selected from the group consisting of 40 brix, 42 brix, 44 brix, 46 brix, 48 brix, 50 brix, 52 brix, 54 brix, 56 brix, 58 brix, and 60 brix; and any one upper limit selected from the group consisting of 80 brix, 78 brix, 76 brix, 74 brix, 72 brix, 70 brix, 68 brix, 66 brix, 64 brix, and 62 brix. For example, the Brix of the sugar solution may be 40-80 brix, 40-78 brix, 40-76 brix, 40-74 brix, 40-72 brix, 40-70 brix, 40-68 brix, 40-66 brix, 40-64 brix, 40-62 brix, 40-60 brix, 42-80 brix, 42-78 brix, 42-76 brix, 42-74 brix, 42-72 brix, 42-70 brix, 42-68 brix, 42-66 brix, 42-64 brix, 42-62 brix, 42-60 brix, 44-80 brix, 44-78 brix, 44-76 brix, 44-74 brix, 44-72 brix, 44-70 brix, 44-68 brix, 44-66 brix, 44-64 brix, 44-62 brix, or 44-60 brix.

In one embodiment, the wavy laver sheet may be applied with a sugar solution having the Brix range in a weight of 0.5 to 5.5 g per area of 39,900 mm² of the laver.

Specifically, the weight of the applied sugar solution per area of 39,900 mm² of the wavy laver sheet may be in a range consisting of any one lower limit selected from the group consisting of 0.5 g, 0.6 g, 0.7 g, 0.8 g, 0.9 g, 1 g, 1.1 g, 1.2 g, 1.3 g, 1.4 g, 1.5 g, 1.6 g, 1.7 g, 1.8 g, 1.9 g, 2 g, 2.1 g, 2.2 g, 2.3 g, 2.4 g, and 2.5 g; and any one upper limit selected from the group consisting of 5.5 g, 5.4 g, 5.3 g, 5.2 g, 5.1 g, 5 g, 4.9 g, 4.8 g, 4.7 g, 4.6 g, 4.5 g, 4.4 g, 4.3 g, 4.2 g, 4.1 g, 4 g, 3.9 g, 3.8 g, 3.7 g, 3.6 g, 3.5 g, 3.4 g, 3.3 g, 3.2 g, 3.1 g, 3 g, 2.9 g, 2.8 g, 2.7 g, and 2.6 g.

For example, the weight of the applied sugar solution per area of 39,900 mm² of the wavy laver sheet may be 0.5-5.5 g, 0.5-5.3 g, 0.5-5.2 g, 0.5-5 g, 0.5-4.9 g, 0.5-4.7 g, 0.5-4.5 g, 0.5-4.3 g, 0.5-4.2 g, 0.5-4 g, 0.5-3.8 g, 0.5-3.6 g, 0.5-3.4 g, 0.5-3.2 g, 0.5-3 g, 0.5-2.8 g, 0.5-2.6 g, 0.7-5.5 g, 0.7-5.3 g, 0.7-5.2 g, 0.7-5 g, 0.7-4.9 g, 0.7-4.7 g, 0.7-4.5 g, 0.7-4.3 g, 0.7-4.2 g, 0.7-4 g, 0.7-3.8 g, 0.7-3.6 g, 0.7-3.4 g, 0.7-3.2 g, 0.7-3 g, 0.7-2.8 g, 0.7-2.6 g, 1-5.5 g, 1-5.3 g, 1-5.2 g, 1-5 g, 1-4.9 g, 1-4.7 g, 1-4.5 g, 1-4.3 g, 1-4.2 g, 1-4 g, 1-3.8 g, 1-3.6 g, 1-3.4 g, 1-3.2 g, 1-3 g, 1-2.8 g, 1-2.6 g, 1.3-5.5 g, 1.3-5.3 g, 1.3-5.2 g, 1.3-5 g, 1.3-4.9 g, 1.3-4.7 g, 1.3-4.5 g, 1.3-4.3 g, 1.3-4.2 g, 1.3-4 g, 1.3-3.8 g, 1.3-3.6 g, 1.3-3.4 g, 1.3-3.2 g, 1.3-3 g, 1.3-2.8 g, or 1.3-2.6 g, but is not limited thereto.

In another embodiment, the weight of one laver sheet having an area of 39,900 mm² in the wavy laver sheet of the present application may be 1.8 to 3.0 g. The sugar solution having the Brix range in the wavy laver sheet of the present application, may be applied in a weight of 0.5 to 5.5 g per 1.8 to 3.0 g of one laver sheet. Specifically, the weight of the applied sugar solution per weight of 1.8 to 3.0 g of one laver sheet of the wavy laver sheet may be in a range consisting of any one lower limit selected from the group consisting of 0.5 g, 0.6 g, 0.7 g, 0.8 g, 0.9 g, 1 g, 1.1 g, 1.2 g, 1.3 g, 1.4 g, 1.5 g, 1.6 g, 1.7 g, 1.8 g, 1.9 g, 2 g, 2.1 g, 2.2 g, 2.3 g, 2.4 g, and 2.5 g; and any one upper limit selected from the group consisting of 5.5 g, 5.4 g, 5.3 g, 5.2 g, 5.1 g, 5 g, 4.9 g, 4.8 g, 4.7 g, 4.6 g, 4.5 g, 4.4 g, 4.3 g, 4.2 g, 4.1 g, 4 g, 3.9 g, 3.8 g, 3.7 g, 3.6 g, 3.5 g, 3.4 g, 3.3 g, 3.2 g, 3.1 g, 3 g, 2.9 g, 2.8 g, 2.7 g, and 2.6 g.

For example, the weight of the applied sugar solution per weight of 1.8 to 3.0 g of one laver sheet of the wavy laver sheet may be 0.5-5.5 g, 0.5-5.3 g, 0.5-5.2 g, 0.5-5 g, 0.5-4.9 g, 0.5-4.7 g, 0.5-4.5 g, 0.5-4.3 g, 0.5-4.2 g, 0.5-4 g, 0.5-3.8 g, 0.5-3.6 g, 0.5-3.4 g, 0.5-3.2 g, 0.5-3 g, 0.5-2.8 g, 0.5-2.6 g, 0.7-5.5 g, 0.7-5.3 g, 0.7-5.2 g, 0.7-5 g, 0.7-4.9 g, 0.7-4.7 g, 0.7-4.5 g, 0.7-4.3 g, 0.7-4.2 g, 0.7-4 g, 0.7-3.8 g, 0.7-3.6 g, 0.7-3.4 g, 0.7-3.2 g, 0.7-3 g, 0.7-2.8 g, 0.7-2.6 g, 1-5.5 g, 1-5.3 g, 1-5.2 g, 1-5 g, 1-4.9 g, 1-4.7 g, 1-4.5 g, 1-4.3 g, 1-4.2 g, 1-4 g, 1-3.8 g, 1-3.6 g, 1-3.4 g, 1-3.2 g, 1-3 g, 1-2.8 g, 1-2.6 g, 1.3-5.5 g, 1.3-5.3 g, 1.3-5.2 g, 1.3-5 g, 1.3-4.9 g, 1.3-4.7 g, 1.3-4.5 g, 1.3-4.3 g, 1.3-4.2 g, 1.3-4 g, 1.3-3.8 g, 1.3-3.6 g, 1.3-3.4 g, 1.3-3.2 g, 1.3-3 g, 1.3-2.8 g, or 1.3-2.6 g, but is not limited thereto.

The thickness of the wavy laver sheet of the present application is characterized by having a thicker thickness compared to the thin thickness of regular laver sheets or baked laver sheets.

The thickness of the wavy laver sheet of the present application may be measured using a vernier caliper or a digital thickness gauge. The thickness of the wavy laver sheet may be an average value of thickness measurement values measured at two or more locations on the wavy laver sheet using the device. For example, the thickness of the wavy laver sheet may be an average value of thickness measurement values obtained by measuring the thicknesses of four corners and one center of a square piece of laver.

In one embodiment, the thickness of the wavy laver sheet of the present application may be 2 mm to 4.5 mm.

Specifically, the thickness of the wavy laver sheet may be a thickness in the range consisting of any one lower limit selected from the group consisting of 2 mm, 2.1 mm, 2.2 mm, 2.3 mm, 2.4 mm, 2.5 mm, 2.6 mm, 2.7 mm, 2.8 mm, 2.9 mm, and 3 mm; and any one upper limit selected from the group consisting of 5.5 mm, 5.4 mm, 5.3 mm, 5.2 mm, 5.1 mm, 5 mm, 4.9 mm, 4.8 mm, 4.7 mm, 4.6 mm, and 4.5 mm. More specifically, the thickness of the wavy laver sheet may be 2-5.5 mm, 2-5.4 mm, 2-5.3 mm, 2-5.2 mm, 2-5.1 mm, 2-5 mm, 2-4.9 mm, 2-4.8 mm, 2-4.7 mm, 2-4.6 mm, 2-4.5 mm, 2.1-5.5 mm, 2.1-5.4 mm, 2.1-5.3 mm, 2.1-5.2 mm, 2.1-5.1 mm, 2.1-5 mm, 2.1-4.9 mm, 2.1-4.8 mm, 2.1-4.7 mm, 2.1-4.6 mm, or 2.1-4.5 mm.

In one embodiment, the peak force (unit: g) of the wavy laver sheet of the present application may be 500 or more.

Specifically, the peak force of the wavy laver sheet may be a peak force (g) in the range consisting of any one lower limit selected from the group consisting of 500, 510, 520, 530 and 540; and any one upper limit selected from the group consisting of 1350, 1340, 1330, 1320, 1310, 1300, and 1290.

In one embodiment, the peak time (unit: sec) of the wavy laver sheet of the present application may be 2.5 seconds or more.

Specifically, the peak time of the wavy laver sheet may be in a range consisting of any one lower limit selected from the group consisting of 2 seconds, 2.1 seconds, 2.2 seconds, 2.3 seconds, 2.4 seconds, 2.5 seconds, 2.6 seconds, 2.7 seconds, 2.8 seconds, 2.9 seconds, 3 seconds, 3.1 seconds, 3.2 seconds, 3.3 seconds, 3.4 seconds, 3.5 seconds and 3.6 seconds; and any one upper limit selected from the group consisting of 6 seconds, 5.9 seconds, 5.8 seconds, 5.7 seconds, 5.6 seconds, 5.5 seconds, 5.4 seconds, 5.3 seconds, 5.2 seconds, 5 seconds, 4 seconds, and 3.7 seconds. More specifically, the peak time of the wavy laver sheet may be 2-6 seconds, 2.1-6 seconds, 2.2-6 seconds, 2.3-6 seconds, 2.4-6 seconds, 2.5-6 seconds, 2.6-6 seconds, 2.7-6 seconds, 2.8-6 seconds, 2.9-6 seconds, 3-6 seconds, 3.1-6 seconds, 3.2-6 seconds, 3.3-6 seconds, 3.4-6 seconds, 3.5-6 seconds, 3.6-6 seconds, 3.5-5.3 seconds, 3.5-5.2 seconds, 2.3-3.7 seconds, 2.9-3.7 seconds, or 2.5-3.7 seconds.

The peak force and the peak time of the wavy laver sheet may be measured using a texture analyzer by taking a sample of the laver sheets.

In one embodiment, the measurement conditions for the peak force and the peak time of the wavy laver sheet using the texture analyzer may be measured under conditions of Compression; Pre-Test Speed: 2.00 mm/sec; Test Speed: 1.00 mm/sec; Post-Test Speed: 10.00 mm/sec; Target Mode: Distance; Force: 100.0 g; Distance: 5.000 mm; Strain: 50.0 %; Trigger Type: Auto (Force) using TA-XT Plus (Stable Micro Systems, England).

In the wavy laver sheet of the present application, the wave shape means a curved shape compared to the flat shape of regular laver sheets or baked laver sheets.

In one embodiment, the wave shape of the wavy laver sheet of the present application may have 1 to 10 ridges per 10 mm length of the laver sheets, specifically, 1-2, 1-3, 1-4, 1-5, 1-6, 1-7, 1-8, 1-9, or 1-10 ridges per 10 mm length of the laver snacks.

In one embodiment, the wavy laver sheet may be obtained by applying a sugar solution on a sheet-shaped laver, and then heat treating by grilling the applied laver sheet.

In the present application, the heating treatment by grilling is the same as described in a laver snack and a preparation method of the laver snack to be described below, and thus is not described in duplicate to avoid complexity.

### Laver snack

According to another aspect of the present application, there is provided a laver snack including (a) two laver sheets applied with a sugar solution; and (b) a filling material containing solids between the two laver sheets applied with the sugar solution, the laver snack having the thickness of 2 mm or more, the peak force of 500 or more, the peak time of 2 seconds or more, and a wave shape.

In the present application, the laver snack includes two laver sheets applied with a sugar solution and a filling material containing solids between two laver sheets applied with the sugar solution.

The laver snack of the present application is a laver snack including wavy laver sheet that is thicker, not flat, and has curved wave compared to sold laver sands, which are filled with solids between two laver sheets, and has a new texture, crunchy texture compared to conventional laver sands.

The sugar contained in the sugar solution applied to the laver sheets of the present application may be any food-acceptable sugar, and may be oligosaccharides, polysaccharides, disaccharides, or monosaccharides. Specifically, the sugar contained in the sugar solution may be sucrose, starch syrup, oligosaccharide, fructooligosaccharide, sorbitol, maltitol, polyglycitol, maltose, or stevioside.

In one embodiment, the Brix of the sugar solution may be 40 to 80 brix.

The term "Brix" used in relation to the sugar solution in the present application refers to the concentration of sugar contained in any liquid, and if 5g of sugar is contained in 100 g of any solution, it means 5 brix.

In the present application, the Brix of the sugar solution may be determined by measuring the specific gravity or refractive index of the sugar solution, and specifically, the measurement of the Brix of the sugar solution may be determined by measuring the specific gravity of the sugar solution with a saccharimeter or the refractive index of the sugar solution with a refractometer.

Specifically, the Brix of the sugar solution may be in a range consisting of any one lower limit selected from the group consisting of 40 brix, 42 brix, 44 brix, 46 brix, 48 brix, 50 brix, 52 brix, 54 brix, 56 brix, 58 brix, and 60 brix; and any one upper limit selected from the group consisting of 80 brix, 78 brix, 76 brix, 74 brix, 72 brix, 70 brix, 68 brix, 66 brix, 64 brix, and 62 brix. More specifically, the Brix of the sugar solution may be 40-80 brix, 40-78 brix, 40-76 brix, 40-74 brix, 40-72 brix, 40-70 brix, 40-68 brix, 40-66 brix, 40-64 brix, 40-62 brix, 40-60 brix, 42-80 brix, 42-78 brix, 42-76 brix, 42-74 brix, 42-72 brix, 42-70 brix, 42-68 brix, 42-66 brix, 42-64 brix, 42-62 brix, 42-60 brix, 44-80 brix, 44-78 brix, 44-76 brix, 44-74 brix, 44-72 brix, 44-70 brix, 44-68 brix, 44-66 brix, 44-64 brix, 44-62 brix, or 44-60 brix.

In one embodiment, the sugar solution having the Brix range in the laver snack of the present application may be applied in a weight of 0.5 to 5.5 g per area of 39,900 mm² of one laver sheet.

Specifically, the weight of the applied sugar solution per area of 39,900 mm² of one laver sheet in the laver snack may be in a range consisting of any one lower limit selected from the group consisting of 0.5 g, 0.6 g, 0.7 g, 0.8 g, 0.9 g, 1 g, 1.1 g, 1.2 g, 1.3 g, 1.4 g, 1.5 g, 1.6 g, 1.7 g, 1.8 g, 1.9 g, 2 g, 2.1 g, 2.2 g, 2.3 g, 2.4 g, and 2.5 g; and any one upper limit selected from the group consisting of 5.5 g, 5.4 g, 5.3 g, 5.2 g, 5.1 g, 5 g, 4.9 g, 4.8 g, 4.7 g, 4.6 g, 4.5 g, 4.4 g, 4.3 g, 4.2 g, 4.1 g, 4 g, 3.9 g, 3.8 g, 3.7 g, 3.6 g, 3.5 g, 3.4 g, 3.3 g, 3.2 g, 3.1 g, 3 g, 2.9 g, 2.8 g, 2.7 g, and 2.6 g.

For example, the weight of the applied sugar solution per area of 39,900 mm² of one laver sheet may be 0.5-5.5 g, 0.5-5.3 g, 0.5-5.2 g, 0.5-5 g, 0.5-4.9 g, 0.5-4.7 g, 0.5-4.5 g, 0.5-4.3 g, 0.5-4.2 g, 0.5-4 g, 0.5-3.8 g, 0.5-3.6 g, 0.5-3.4 g, 0.5-3.2 g, 0.5-3 g, 0.5-2.8 g, 0.5-2.6 g, 0.7-5.5 g, 0.7-5.3 g, 0.7-5.2 g, 0.7-5 g, 0.7-4.9 g, 0.7-4.7 g, 0.7-4.5 g, 0.7-4.3 g, 0.7-4.2 g, 0.7-4 g, 0.7-3.8 g, 0.7-3.6 g, 0.7-3.4 g, 0.7-3.2 g, 0.7-3 g, 0.7-2.8 g, 0.7-2.6 g, 1-5.5 g, 1-5.3 g, 1-5.2 g, 1-5 g, 1-4.9 g, 1-4.7 g, 1-4.5 g, 1-4.3 g, 1-4.2 g, 1-4 g, 1-3.8 g, 1-3.6 g, 1-3.4 g, 1-3.2 g, 1-3 g, 1-2.8 g, 1-2.6 g, 1.3-5.5 g, 1.3-5.3 g, 1.3-5.2 g, 1.3-5 g, 1.3-4.9 g, 1.3-4.7 g, 1.3-4.5 g, 1.3-4.3 g, 1.3-4.2 g, 1.3-4 g, 1.3-3.8 g, 1.3-3.6 g, 1.3-3.4 g, 1.3-3.2 g, 1.3-3 g, 1.3-2.8 g, or 1.3-2.6 g, but is not limited thereto.

In another embodiment, the weight of one laver sheet having an area of 39,900 mm² included in the laver snack of the present application may be 1.8 to 3.0 g. The sugar solution having the Brix range in the laver snack of the present application may be applied in a weight of 0.5 to 5.5 g per 1.8 to 3.0 g of one laver sheet. Specifically, the weight of the applied sugar solution per weight of 1.8 to 3.0 g of one laver sheet in the laver snack may be in a range consisting of any one lower limit selected from the group consisting of 0.5 g, 0.6 g, 0.7 g, 0.8 g, 0.9 g, 1 g, 1.1 g, 1.2 g, 1.3 g, 1.4 g, 1.5 g, 1.6 g, 1.7 g, 1.8 g, 1.9 g, 2 g, 2.1 g, 2.2 g, 2.3 g, 2.4 g, and 2.5 g; and any one upper limit selected from the group consisting of 5.5 g, 5.4 g, 5.3 g, 5.2 g, 5.1 g, 5 g, 4.9 g, 4.8 g, 4.7 g, 4.6 g, 4.5 g, 4.4 g, 4.3 g, 4.2 g, 4.1 g, 4 g, 3.9 g, 3.8 g, 3.7 g, 3.6 g, 3.5 g, 3.4 g, 3.3 g, 3.2 g, 3.1 g, 3 g, 2.9 g, 2.8 g, 2.7 g, and 2.6 g.

For example, the weight of the applied sugar solution per weight of 1.8 to 3.0 g of one laver sheet may be 0.5-5.5 g, 0.5-5.3 g, 0.5-5.2 g, 0.5-5 g, 0.5-4.9 g, 0.5-4.7 g, 0.5-4.5 g, 0.5-4.3 g, 0.5-4.2 g, 0.5-4 g, 0.5-3.8 g, 0.5-3.6 g, 0.5-3.4 g, 0.5-3.2 g, 0.5-3 g, 0.5-2.8 g, 0.5-2.6 g, 0.7-5.5 g, 0.7-5.3 g, 0.7-5.2 g, 0.7-5 g, 0.7-4.9 g, 0.7-4.7 g, 0.7-4.5 g, 0.7-4.3 g, 0.7-4.2 g, 0.7-4 g, 0.7-3.8 g, 0.7-3.6 g, 0.7-3.4 g, 0.7-3.2 g, 0.7-3 g, 0.7-2.8 g, 0.7-2.6 g, 1-5.5 g, 1-5.3 g, 1-5.2 g, 1-5 g, 1-4.9 g, 1-4.7 g, 1-4.5 g, 1-4.3 g, 1-4.2 g, 1-4 g, 1-3.8 g, 1-3.6 g, 1-3.4 g, 1-3.2 g, 1-3 g, 1-2.8 g, 1-2.6 g, 1.3-5.5 g, 1.3-5.3 g, 1.3-5.2 g, 1.3-5 g, 1.3-4.9 g, 1.3-4.7 g, 1.3-4.5 g, 1.3-4.3 g, 1.3-4.2 g, 1.3-4 g, 1.3-3.8 g, 1.3-3.6 g, 1.3-3.4 g, 1.3-3.2 g, 1.3-3 g, 1.3-2.8 g, or 1.3-2.6 g, but is not limited thereto.

Since the laver snack of the present application includes two laver sheets, a double amount of sugar solution of the amount of the sugar solution applied to the one laver sheet may be included in the entire laver snack.

In one embodiment, the filling material located between the two laver sheets of the present application contains solids.

The solids may include grains, nuts, and seafood, wherein the grains may include rice, glutinous rice, brown rice, millet, sorghum, corn, barley, buckwheat, wheat, rye, triticale, oats, quinoa, or fonio, and the nuts may include almonds, walnuts, peanuts, pistachios, pecans, hazelnuts, Brazil nuts, macadamias, soybeans, cacao nibs, cashews, coconuts, pine nuts, hazelnuts, acorns, chestnuts, sunflower seeds, pumpkin seeds, sesame seeds, perilla seeds, and black sesame seeds, and dried or semi-dried fruits may be included, for example, dried or semi-dried bananas, cherries, blueberries, strawberries, or grapes. The seafood may be preferably dried or semi-dried seafood, for example, dried or semi-dried anchovies, dried pollack, pollack, herring, oysters, flounder, cuttlefish, squid, octopus, or shrimp.

The solids may be included in an amount of 5 to 20 wt% based on the total weight of the filling material, specifically, may be included in an amount of 5 to 19 wt%, 5 to 18 wt%, 5 to 17 wt%, 5 to 16 wt%, 5 to 15 wt%, 6 to 20 wt%, 6 to 19 wt%, 6 to 18 wt%, 6 to 17 wt%, 6 to 16 wt%, 6 to 15 wt%, 7 to 20 wt%, 7 to 19 wt%, 7 to 18 wt%, 7 to 17 wt%, 7 to 16 wt%, or 7 to 15 wt%.

In addition to the solids, the filling material may be a sugar solution, starch, dietary fiber, liquid sauce, or powder seasoning, and the sugar solution may comprise sucrose, starch sugar, dextrin, oligosaccharide, or sorbitol.

In one embodiment, the thickness of the laver snack of the present application may be 2 mm or more.

The thickness of the laver snack of the present application may be measured using a vernier caliper or a digital thickness gauge, like the wavy laver sheet. The thickness of the laver snack may be an average value of thickness measurement values measured at two or more portions of the laver snack using the device. For example, the thickness of the laver snack may be an average value of thickness measurement values obtained by measuring the thicknesses of four corners and one center of a square laver snack.

Specifically, the thickness of the laver snack may be a thickness in the range consisting of any one lower limit selected from the group consisting of 2 mm, 2.1 mm, 2.2 mm, 2.3 mm, 2.4 mm, 2.5 mm, 2.6 mm, 2.7 mm, 2.8 mm, 2.9 mm, and 3 mm; and any one upper limit selected from the group consisting of 5.5 mm, 5.4 mm, 5.3 mm, 5.2 mm, 5.1 mm, 5 mm, 4.9 mm, 4.8 mm, 4.7 mm, 4.6 mm, and 4.5 mm. More specifically, the thickness of the laver snack may be 2-5.5 mm, 2-5.4 mm, 2-5.3 mm, 2-5.2 mm, 2-5.1 mm, 2-5 mm, 2-4.9 mm, 2-4.8 mm, 2-4.7 mm, 2-4.6 mm, 2-4.5 mm, 2.1-5.5 mm, 2.1-5.4 mm, 2.1-5.3 mm, 2.1-5.2 mm, 2.1-5.1 mm, 2.1-5 mm, 2.1-4.9 mm, 2.1-4.8 mm, 2.1-4.7 mm, 2.1-4.6 mm, or 2.1-4.5 mm.

In one embodiment, the peak force (unit: g) of the laver snack of the present application may be 500 or more.

Specifically, the peak force of the laver snack may be a peak force (g) in the range consisting of any one lower limit selected from the group consisting of 500, 510, 520, 530 and 540; and any one upper limit selected from the group consisting of 1350, 1340, 1330, 1320, 1310, 1300, and 1290. More specifically, the peak force of the laver snack may be 500-1350, 510-1350, 520-1350, 530-1350, 540-1350; 500-1340, 510-1330, 520-1320, 530-1310; 500-1300, 510-1300, 520-1300, 530-1300, or 540-1300.

In one embodiment, the peak time (unit of sec) of the laver snack of the present application may be 2.5 seconds or more.

Specifically, the peak time of the laver snack may be in a range consisting of any one lower limit selected from the group consisting of 2.5 seconds, 2.6 seconds, 2.7 seconds, 2.8 seconds, 2.9 seconds, 3 seconds, 3.1 seconds, 3.2 seconds, 3.3 seconds, 3.4 seconds, 3.5 seconds and 3.6 seconds; and any one upper limit selected from the group consisting of 7 seconds, 6.5 seconds, 6 seconds, 5.9 seconds, 5.8 seconds, 5.7 seconds, 5.6 seconds, 5.5 seconds, 5.4 seconds, 5.3 seconds, 5.2 seconds, 5 seconds, 4 seconds, and 3.7 seconds. More specifically, the peak time of the laver snack may be 2.5-7 seconds, 2.5-6.5 seconds, 2.5-6 seconds, 2.6-7 seconds, 2.6-6.5 seconds, 2.6-6 seconds, 2.7-7 seconds, 2.7-6.5 seconds, 2.7-6 seconds, 2.8-7 seconds, 2.8-6.5 seconds, 2.8-6 seconds, 2.9-7 seconds, 2.9-6.5 seconds, 2.9-6 seconds, 3-6 seconds, 3.1-6 seconds, 3.2-6 seconds, 3.3-6 seconds, 3.4-6 seconds, 3.5-6 seconds, 3.6-6 seconds, 3.5-5.3 seconds, 3.5-5.2 seconds, 2.3-3.7 seconds, 2.9-3.7 seconds, and 2.5-3.7 seconds.

The peak force and the peak time of the laver snack may be measured using a texture analyzer by taking a sample of the laver snack. In one embodiment, the measurement conditions for the peak force and the peak time of the laver snack using the texture analyzer may be measured under conditions of Compression; Pre-Test Speed: 2.00 mm/sec; Test Speed: 1.00 mm/sec; Post-Test Speed: 10.00 mm/sec; Target Mode: Distance; Force: 100.0 g; Distance: 5.000 mm; Strain: 50.0 %; Trigger Type: Auto (Force) using TA-XT Plus (Stable Micro Systems, England).

The wave shape of the laver snack of the present application is a shape formed by complex factors of puffing and contraction of the laver due to the pressure generated when the moisture absorbed by the laver instantly turns into gas (steam) during heat treatment, and means a shape in which the surface of laver is distorted and wrinkled.

In one embodiment, the wave shape of the laver snack of the present application may have 1 to 10 ridges per 10 mm length of the laver snack, specifically, 1-2, 1-3, 1-4, 1-5, 1-6, 1-7, 1-8, 1-9, or 1-10 ridges per 10 mm length of the laver snack.

In one embodiment, the laver snack may be obtained by adding a filling material containing solids between two or more laver sheets applied with a sugar solution and then heat treating by grilling the applied laver sheets.

As used herein, the term heat treating by "grilling" is a method of heat treating the upper and lower surfaces of two or more laver sheets using radiant heat.

In one embodiment, the heat treatment by grilling may be heat treatment performed by directly applying heat from a hot plate positioned above the laver and a hot plate positioned below the laver. Specifically, the heat treatment by grilling may also be performed by placing two or more laver sheets in the center and pressing the two or more laver sheets located in the center using the upper and lower hot plates.

In one embodiment, during the heat treatment by grilling, the grilling distance may be 1.5 mm to 5 mm, and the term "grilling distance" means a distance between the hot plates above and below the laver sheet.

### Preparation method of laver snack

According to yet another aspect of the present application, there is provided a preparation method of a laver snack including adding a filling material containing solids between two laver sheets applied with a sugar solution; and heat treating by grilling the two laver sheets including the filling material, wherein the grilling distance is 1.5 mm to 5 mm.

The sugar contained in the sugar solution applied to the laver sheet may be any food-acceptable sugar, and may be oligosaccharides, polysaccharides, disaccharides, or monosaccharides. Specifically, the sugar contained in the sugar solution may be sucrose, starch syrup, oligosaccharide, fructooligosaccharide, sorbitol, maltitol, polyglycitol, maltose, or stevioside.

In one embodiment, the Brix of the sugar solution may be 40 to 80 brix.

As used herein, the term "Brix" used in relation to the sugar solution refers to the concentration of sugar contained in any liquid, and if 5 g of sugar is contained in 100 g of any solution, it means 5 brix.

Specifically, the Brix of the sugar solution may be in a range consisting of any one lower limit selected from the group consisting of 40 brix, 42 brix, 44 brix, 46 brix, 48 brix, 50 brix, 52 brix, 54 brix, 56 brix, 58 brix, and 60 brix; and any one upper limit selected from the group consisting of 80 brix, 78 brix, 76 brix, 74 brix, 72 brix, 70 brix, 68 brix, 66 brix, 64 brix, and 62 brix. More specifically, the Brix of the sugar solution may be 40-80 brix, 40-78 brix, 40-76 brix, 40-74 brix, 40-72 brix, 40-70 brix, 40-68 brix, 40-66 brix, 40-64 brix, 40-62 brix, 40-60 brix, 42-80 brix, 42-78 brix, 42-76 brix, 42-74 brix, 42-72 brix, 42-70 brix, 42-68 brix, 42-66 brix, 42-64 brix, 42-62 brix, 42-60 brix, 44-80 brix, 44-78 brix, 44-76 brix, 44-74 brix, 44-72 brix, 44-70 brix, 44-68 brix, 44-66 brix, 44-64 brix, 44-62 brix, or 44-60 brix.

In one embodiment, the sugar solution having the Brix range in the laver snack of the present application may be applied in a weight of 0.5 to 5.5 g per area of 39,900 mm² of one laver sheet.

Specifically, the weight of the applied sugar solution per area of 39,900 mm² of one laver sheet in the laver snack may be in a range consisting of any one lower limit selected from the group consisting of 0.5 g, 0.6 g, 0.7 g, 0.8 g, 0.9 g, 1 g, 1.1 g, 1.2 g, 1.3 g, 1.4 g, 1.5 g, 1.6 g, 1.7 g, 1.8 g, 1.9 g, 2 g, 2.1 g, 2.2 g, 2.3 g, 2.4 g, and 2.5 g; and any one upper limit selected from the group consisting of 5.5 g, 5.4 g, 5.3 g, 5.2 g, 5.1 g, 5 g, 4.9 g, 4.8 g, 4.7 g, 4.6 g, 4.5 g, 4.4 g, 4.3 g, 4.2 g, 4.1 g, 4 g, 3.9 g, 3.8 g, 3.7 g, 3.6 g, 3.5 g, 3.4 g, 3.3 g, 3.2 g, 3.1 g, 3 g, 2.9 g, 2.8 g, 2.7 g, and 2.6 g.

For example, the weight of the applied sugar solution per area of 39,900 mm² of one laver sheet may be 0.5-5.5 g, 0.5-5.3 g, 0.5-5.2 g, 0.5-5 g, 0.5-4.9 g, 0.5-4.7 g, 0.5-4.5 g, 0.5-4.3 g, 0.5-4.2 g, 0.5-4 g, 0.5-3.8 g, 0.5-3.6 g, 0.5-3.4 g, 0.5-3.2 g, 0.5-3 g, 0.5-2.8 g, 0.5-2.6 g, 0.7-5.5 g, 0.7-5.3 g, 0.7-5.2 g, 0.7-5 g, 0.7-4.9 g, 0.7-4.7 g, 0.7-4.5 g, 0.7-4.3 g, 0.7-4.2 g, 0.7-4 g, 0.7-3.8 g, 0.7-3.6 g, 0.7-3.4 g, 0.7-3.2 g, 0.7-3 g, 0.7-2.8 g, 0.7-2.6 g, 1-5.5 g, 1-5.3 g, 1-5.2 g, 1-5 g, 1-4.9 g, 1-4.7 g, 1-4.5 g, 1-4.3 g, 1-4.2 g, 1-4 g, 1-3.8 g, 1-3.6 g, 1-3.4 g, 1-3.2 g, 1-3 g, 1-2.8 g, 1-2.6 g, 1.3-5.5 g, 1.3-5.3 g, 1.3-5.2 g, 1.3-5 g, 1.3-4.9 g, 1.3-4.7 g, 1.3-4.5 g, 1.3-4.3 g, 1.3-4.2 g, 1.3-4 g, 1.3-3.8 g, 1.3-3.6 g, 1.3-3.4 g, 1.3-3.2 g, 1.3-3 g, 1.3-2.8 g, or 1.3-2.6 g, but is not limited thereto.

In another embodiment, the weight of one laver sheet having an area of 39,900 mm² included in the laver snack of the present application may be 1.8 to 3.0 g. The sugar solution having the Brix range in the laver snack of the present application may be applied in a weight of 0.5 to 5.5 g per 1.8 to 3.0 g of one laver sheet. Specifically, the weight of the applied sugar solution per weight of 1.8 to 3.0 g of one laver sheet in the laver snack may be in a range consisting of any one lower limit selected from the group consisting of 0.5 g, 0.6 g, 0.7 g, 0.8 g, 0.9 g, 1 g, 1.1 g, 1.2 g, 1.3 g, 1.4 g, 1.5 g, 1.6 g, 1.7 g, 1.8 g, 1.9 g, 2 g, 2.1 g, 2.2 g, 2.3 g, 2.4 g, and 2.5 g; and any one upper limit selected from the group consisting of 5.5 g, 5.4 g, 5.3 g, 5.2 g, 5.1 g, 5 g, 4.9 g, 4.8 g, 4.7 g, 4.6 g, 4.5 g, 4.4 g, 4.3 g, 4.2 g, 4.1 g, 4 g, 3.9 g, 3.8 g, 3.7 g, 3.6 g, 3.5 g, 3.4 g, 3.3 g, 3.2 g, 3.1 g, 3 g, 2.9 g, 2.8 g, 2.7 g, and 2.6 g.

For example, the weight of the applied sugar solution per weight of 1.8 to 3.0 g of one laver sheet may be 0.5-5.5 g, 0.5-5.3 g, 0.5-5.2 g, 0.5-5 g, 0.5-4.9 g, 0.5-4.7 g, 0.5-4.5 g, 0.5-4.3 g, 0.5-4.2 g, 0.5-4 g, 0.5-3.8 g, 0.5-3.6 g, 0.5-3.4 g, 0.5-3.2 g, 0.5-3 g, 0.5-2.8 g, 0.5-2.6 g, 0.7-5.5 g, 0.7-5.3 g, 0.7-5.2 g, 0.7-5 g, 0.7-4.9 g, 0.7-4.7 g, 0.7-4.5 g, 0.7-4.3 g, 0.7-4.2 g, 0.7-4 g, 0.7-3.8 g, 0.7-3.6 g, 0.7-3.4 g, 0.7-3.2 g, 0.7-3 g, 0.7-2.8 g, 0.7-2.6 g, 1-5.5 g, 1-5.3 g, 1-5.2 g, 1-5 g, 1-4.9 g, 1-4.7 g, 1-4.5 g, 1-4.3 g, 1-4.2 g, 1-4 g, 1-3.8 g, 1-3.6 g, 1-3.4 g, 1-3.2 g, 1-3 g, 1-2.8 g, 1-2.6 g, 1.3-5.5 g, 1.3-5.3 g, 1.3-5.2 g, 1.3-5 g, 1.3-4.9 g, 1.3-4.7 g, 1.3-4.5 g, 1.3-4.3 g, 1.3-4.2 g, 1.3-4 g, 1.3-3.8 g, 1.3-3.6 g, 1.3-3.4 g, 1.3-3.2 g, 1.3-3 g, 1.3-2.8 g, or 1.3-2.6 g, but is not limited thereto.

Since the laver snack of the present application includes two laver sheets, a double amount of sugar solution of the amount of the sugar solution applied to the one laver sheet may be included in the entire laver snack.

The method of applying the sugar solution to the laver sheets may be performed, for example, by applying the sugar solution to a brush and then brushing the sugar solution on the laver sheet, and another method may be a method of absorbing a sugar solution in a sponge and then applying the sugar solution by pressing with a predetermined force, or a method of connecting a sugar solution to a nozzle and then spraying small particles to the laver sheet using air.

In one embodiment, the content of moisture in the sugar solution applied to one laver sheet having an area of 39,900 mm² in the laver snack of the present application may be 0.25 to 1.38 g.

Specifically, the content of moisture in the sugar solution applied to one laver sheet having an area of 39,900 mm² in the laver snack may be a moisture content in the range consisting of any one lower limit selected from the group consisting of 0.25 g, 0.27 g, 0.3 g, 0.32 g, 0.34 g, 0.36 g, 0.38 g, 0.4 g, 0.42 g, 0.44 g, 0.46 g, and 0.48 g; and any one upper limit selected from the group consisting of 1.38 g, 1.375 g, 1.36 g, 1.34 g, 1.32 g, 1.3 g, 1.28 g, 1.26 g, 1.24 g, 1.22 g, 1.2 g, 1.18 g, 1.16 g, 1.14 g, 1.12 g, and 1.1 g For example, the content of moisture may be 0.25 - 1.38 g, 0.25 - 1.375 g, 0.25 - 1.36 g, 0.25 - 1.34 g, 0.25 - 1.32 g, 0.25 - 1.3 g, 0.25 - 1.28 g, 0.25 - 1.26 g, 0.25 - 1.24 g, 0.25 - 1.22 g, 0.25 - 1.22 g, 0.25 - 1.18 g, 0.25 - 1.16 g, 0.25 - 1.14 g, 0.25 - 1.12 g, 0.25 - 1.1 g, 0.27 - 1.38 g, 0.27 - 1.375 g, 0.27 - 1.36 g, 0.27 - 1.34 g, 0.27 - 1.32 g, 0.27 - 1.3 g, 0.27 - 1.28 g, 0.27 - 1.26 g, 0.27 - 1.24 g, 0.27 - 1.22 g, 0.27 - 1.22 g, 0.27 - 1.18 g, 0.27 - 1.16 g, 0.27 - 1.14 g, 0.27 - 1.12 g, 0.27 - 1.1 g, 0.3 - 1.38 g, 0.3 - 1.375 g, 0.3 - 1.36 g, 0.3 - 1.34 g, 0.3 - 1.32 g, 0.3 - 1.3 g, 0.3 - 1.28 g, 0.3 - 1.26 g, 0.3 - 1.24 g, 0.3 - 1.22 g, 0.3 - 1.22 g, 0.3 - 1.18 g, 0.3 - 1.16 g, 0.3 - 1.14 g, 0.3 - 1.12 g, 0.3 - 1.1 g, 0.34 - 1.38 g, 0.34 - 1.375 g, 0.34 - 1.36 g, 0.34 - 1.34 g, 0.34 - 1.32 g, 0.34 - 1.3 g, 0.34 - 1.28 g, 0.34 - 1.26 g, 0.34 - 1.24 g, 0.34 - 1.22 g, 0.34 - 1.22 g, 0.34 - 1.18 g, 0.34 - 1.16 g, 0.34 - 1.14 g, 0.34 - 1.12 g, or 0.34 - 1.1 g.

In another embodiment, the weight of one laver sheet having an area of 39,900 mm² included in the laver snack of the present application may be 1.8 to 3.0 g.

The content of moisture in the sugar solution applied to one laver sheet having the weight of 1.8 to 3.0 g in the laver snack of the present application may be 0.25 to 1.38 g. Specifically, the content of moisture in the sugar solution applied to one laver sheet having the weight of 1.8 to 3.0 g may be a moisture content in the range consisting of any one lower limit selected from the group consisting of 0.25 g, 0.27 g, 0.3 g, 0.32 g, 0.34 g, 0.36 g, 0.38 g, 0.4 g, 0.42 g, 0.44 g, 0.46 g, and 0.48 g; and any one upper limit selected from the group consisting of 1.38 g, 1.375 g, 1.36 g, 1.34 g, 1.32 g, 1.3 g, 1.28 g, 1.26 g, 1.24 g, 1.22 g, 1.2 g, 1.18 g, 1.16 g, 1.14 g, 1.12 g, and 1.1 g. For example, the content of moisture may be 0.25 - 1.38 g, 0.25 - 1.375 g, 0.25 - 1.36 g, 0.25 - 1.34 g, 0.25 - 1.32 g, 0.25 - 1.3 g, 0.25 - 1.28 g, 0.25 - 1.26 g, 0.25 - 1.24 g, 0.25 - 1.22 g, 0.25 - 1.22 g, 0.25 - 1.18 g, 0.25 - 1.16 g, 0.25 - 1.14 g, 0.25 - 1.12 g, 0.25 - 1.1 g, 0.27 - 1.38 g, 0.27 - 1.375 g, 0.27 - 1.36 g, 0.27 - 1.34 g, 0.27 - 1.32 g, 0.27 - 1.3 g, 0.27 - 1.28 g, 0.27 - 1.26 g, 0.27 - 1.24 g, 0.27 - 1.22 g, 0.27 - 1.22 g, 0.27 - 1.18 g, 0.27 - 1.16 g, 0.27 - 1.14 g, 0.27 - 1.12 g, 0.27 - 1.1 g, 0.3 - 1.38 g, 0.3 - 1.375 g, 0.3 - 1.36 g, 0.3 - 1.34 g, 0.3 - 1.32 g, 0.3 - 1.3 g, 0.3 - 1.28 g, 0.3 - 1.26 g, 0.3 - 1.24 g, 0.3 - 1.22 g, 0.3 - 1.22 g, 0.3 - 1.18 g, 0.3 - 1.16 g, 0.3 - 1.14 g, 0.3 - 1.12 g, 0.3 - 1.1 g, 0.34 - 1.38 g, 0.34 - 1.375 g, 0.34 - 1.36 g, 0.34 - 1.34 g, 0.34 - 1.32 g, 0.34 - 1.3 g, 0.34 - 1.28 g, 0.34 - 1.26 g, 0.34 - 1.24 g, 0.34 - 1.22 g, 0.34 - 1.22 g, 0.34 - 1.18 g, 0.34 - 1.16 g, 0.34 - 1.14 g, 0.34 - 1.12 g, or 0.34 - 1.1 g.

The filling material containing solids is added between the two laver sheets applied with the sugar solution.

The solids may include grains, nuts, and seafood, wherein the grains may include rice, glutinous rice, brown rice, millet, sorghum, corn, barley, buckwheat, wheat, rye, triticale, oats, quinoa, or fonio, and the nuts may include almonds, walnuts, peanuts, pistachios, pecans, hazelnuts, Brazil nuts, macadamias, soybeans, cacao nibs, cashews, coconuts, pine nuts, hazelnuts, acorns, chestnuts, sunflower seeds, pumpkin seeds, sesame seeds, perilla seeds, and black sesame seeds, and may include dried or semi-dried fruits, for example, dried or semi-dried bananas, cherries, blueberries, strawberries, or grapes. The seafood may be preferably dried or semi-dried seafood, for example, dried or semi-dried anchovies, dried pollack, pollack, herring, oysters, flounder, cuttlefish, squid, octopus, or shrimp.

The solids may be included in an amount of 5 to 20 wt% based on the total weight of the filling material, specifically, may be included in an amount of 5 to 19 wt%, 5 to 18 wt%, 5 to 17 wt%, 5 to 16 wt%, 5 to 15 wt%, 6 to 20 wt%, 6 to 19 wt%, 6 to 18 wt%, 6 to 17 wt%, 6 to 16 wt%, 6 to 15 wt%, 7 to 20 wt%, 7 to 19 wt%, 7 to 18 wt%, 7 to 17 wt%, 7 to 16 wt%, or 7 to 15 wt%.

In addition to the solids, the filling material may be a sugar solution, starch, dietary fiber, liquid sauce, or powdered seasoning. The sugar contained in the sugar solution included in the filling material may be any food-acceptable sugar, and may be oligosaccharides, polysaccharides, disaccharides, or monosaccharides. Specifically, the sugar contained in the sugar solution may be sucrose, starch syrup, oligosaccharide, fructooligosaccharide, sorbitol, maltitol, polyglycitol, maltose, or stevioside. The sugar solution included in the filling material may be the same sugar solution as the sugar solution applied to the laver sheets described above, and in this case, the content described in the sugar solution applied to the laver sheets may be equally applied to the sugar solution included in the filling material.

In the preparation method of the laver snack of the present application, the laver snack may be prepared by adding a filling material containing solids between two or more laver sheets applied with a sugar solution, and then heat treating by grilling the applied laver sheet.

As used herein, the term heat treatment by "grilling" is a method of heat treating the upper and lower surfaces of two or more laver sheets using radiant heat.

In one embodiment, the heat treatment by grilling may be heat treatment performed by directly applying heat from a hot plate positioned above the laver sheet and a hot plate positioned below the laver sheet. Specifically, the heat treatment by grilling may also be performed by placing two or more laver sheets in the center and pressing the two or more laver sheets located in the center using the upper and lower hot plates.

The temperature of the hot plate during grilling may be in the range of 150°C to 250°C, and the grilling treatment time may be in the range of 20 seconds to 70 seconds.

In one embodiment, during the heat treatment by grilling, the grilling distance may be 1.5 mm to 5 mm, and the term "grilling distance" means a distance between the hot plates above and below the laver sheets.

Specifically, during the heat treatment by grilling, the grilling distance may be in the range consisting of any one lower limit selected from the group consisting of 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.7 mm, 2.8 mm, 2.9 mm and 3 mm; and any one upper limit selected from the group consisting of 5 mm, 4.9 mm, 4.8 mm, 4.6 mm, 4.4 mm, 4.2 mm, and 4 mm.

More specifically, during the grilling heat treatment, the grilling distance may be 1.5 - 5 mm, 1.6 - 5 mm, 1.7 - 5 mm, 1.8 - 5 mm, 1.9 - 5 mm, 2 - 5 mm, 2.1 - 5 mm, 2.2 - 5 mm, 2.3 - 5 mm, 2.4 - 5 mm, 2.5 - 5 mm, 2.6 - 5 mm, 2.7 - 5 mm, 2.8 - 5 mm; 1.5 - 4.9 mm, 1.7 - 4.9 mm, 1.9 - 4.9 mm, 2.1 - 4.9 mm, 2.3 - 4.9 mm, 2.5 - 4.9 mm, 2.7 - 4.9 mm; 1.5 - 4.8 mm, 1.7 - 4.8 mm, 1.9 - 4.8 mm, 2.1 - 4.8 mm, 2.3 - 4.8 mm, 2.5 - 4.8 mm, 2.7 - 4.8 mm; 1.5 - 4.4 mm, 1.7 - 4.4 mm, 1.9 - 4.4 mm, 2.1 - 4.4 mm, 2.3 - 4.4 mm, 2.5 - 4.4 mm, 2.7 - 4.4 mm; 1.5 - 4.2 mm, 1.7 - 4.2 mm, 1.9 - 4.2 mm, 2.1 - 4.2 mm, 2.3 - 4.2 mm, 2.5 - 4.2 mm, 2.7 - 4.2 mm; 1.5 - 4 mm, 1.7 - 4 mm, 1.9 - 4 mm, 2.1 - 4 mm, 2.3 - 4 mm, 2.5 - 4 mm, or 2.7 - 4 mm.

In one embodiment, the contraction rate of the laver snack after heat treatment by grilling may be 17% to 39%.

In the present application, the contraction rate of the laver snack may be calculated by [area of two laver sheets including filling material before heat treatment by grilling - area of laver snack after heat treatment by grilling] / [area of two laver sheets including filling material before heat treatment by grilling] × 100.

Specifically, the contraction rate of the laver snack after the heat treatment by grilling may be in the range consisting of any one lower limit selected from the group consisting of 17%, 18%, 19%, 20%, 21%, 22%, 23%, 24%, 25%, 26%, 27%, and 28%; and any one upper limit selected from the group consisting of 39%, 38%, 37%, 36%, 35%, 34%, 33%, 32%, and 31%.

More specifically, the contraction rate of the laver snack after grilling heat treatment may be in the range of 17-39%, 18-39%, 19-39%, 20-39%, 21-39%, 22-39%, 23-39%, 24-39%, 25-39%, 26-39%, 27-39%, 28-39%; 17-38%, 18-38%, 19-38%, 20-38%, 21-38%, 22-38%, 23-38%, 24-38%, 25-38%, 26-38%, 27-38%, 28-38%; 17-37%, 18-37%, 19-37%, 20-37%, 21-37%, 22-37%, 23-37%, 24-37%, 25-37%, 26-37%, 27-37%, 28-37%; 17-36%, 18-36%, 19-36%, 20-36%, 21-36%, 22-36%, 23-36%, 24-36%, 25-36%, 26-36%, 27-36%, 28-36%; 17-35%, 18-35%, 19-35%, 20-35%, 21-35%, 22-35%, 23-35%, 24-35%, 25-35%, 26-35%, 27-35%, 28-35%; 17-34%, 18-34%, 19-34%, 20-34%, 21-34%, 22-34%, 23-34%, 24-34%, 25-34%, 26-34%, 27-34%, 28-34%; 17-33%, 18-33%, 19-33%, 20-33%, 21-33%, 22-33%, 23-33%, 24-33%, 25-33%, 26-33%, 27-33%, 28-33%; 17-32%, 18-32%, 19-32%, 20-32%, 21-32%, 22-32%, 23-32%, 24-32%, 25-32%, 26-32%, 27-32%, 28-32%; 17-31%, 18-31%, 19-31%, 20-31%, 21-31%, 22-31%, 23-31%, 24-31%, 25-31%, 26-31%, 27-31%, or 28-31%.

In one embodiment, the thickness of the laver snack of the present application prepared by the preparation method may be 2 mm or more.

Specifically, the thickness of the laver snack may be a thickness in the range consisting of any one lower limit selected from the group consisting of 2 mm, 2.1 mm, 2.2 mm, 2.3 mm, 2.4 mm, 2.5 mm, 2.6 mm, 2.7 mm, 2.8 mm, 2.9 mm, and 3 mm; and any one upper limit selected from the group consisting of 5.5 mm, 5.4 mm, 5.3 mm, 5.2 mm, 5.1 mm, 5 mm, 4.9 mm, 4.8 mm, 4.7 mm, 4.6 mm, and 4.5 mm. More specifically, the thickness of the laver snack may be 22-5.5 mm, 2-5.4 mm, 2-5.3 mm, 2-5.2 mm, 2-5.1 mm, 2-5 mm, 2-4.9 mm, 2-4.8 mm, 2-4.7 mm, 2-4.6 mm, 2-4.5 mm, 2.1-5.5 mm, 2.1-5.4 mm, 2.1-5.3 mm, 2.1-5.2 mm, 2.1-5.1 mm, 2.1-5 mm, 2.1-4.9 mm, 2.1-4.8 mm, 2.1-4.7 mm, 2.1-4.6 mm, or 2.1-4.5 mm.

### [Advantageous Effects]

According to the present application, when heat treating by grilling a laver sheet, the laver was puffed by the moisture contained in a sugar solution applied to the laver sheet to form a wave shape on the laver surface, thereby providing a laver snack with a crunchy texture.

However, the effects of the present application are not limited to the above-mentioned effect, and other effects not mentioned will be clearly understood by those skilled in the art from the following description.

### [Description of Drawings]

FIG. 1 is an image of a digital camera photograph of a laver snack of Preparation Example 1.
FIGS. 2a to 2d illustrate the results measured after measuring peak forces and peak times of a laver snack prepared by varying a grilling distance to 1 mm, 2.8 mm, 4.0 mm, and 5.0 mm as graphs of peak force (Y axis) - peak time (X axis).
FIG. 3 illustrates the results measured after measuring peak forces and peak times of a laver snack prepared by varying the Brix of a sugar solution to 70 brix, 60 brix, 50 brix, and 45 brix as graphs of peak force (Y axis) - peak time (X axis).
FIG. 4 illustrates the results measured after measuring peak forces and peak times of a laver snack prepared by applying the weight of a sugar solution of 5 g, 3 g, and 1 g to two laver sheets having an area of 39,900 mm² as graphs of peak force (Y axis) - peak time (X axis).
FIG. 5 is an image of cross-sections of a laver snack prepared by varying the Brix and grilling distances of sugar solutions in Experimental Examples 1 and 2 measured with a digital camera.

### [Best Mode]

Hereinafter, the present application will be described in detail by Examples. However, the following Examples specifically illustrate the present application, and the content of the present application is not limited by the following Examples.

### Examples

### Preparation Example 1: Preparation of laver snack including two or more wavy laver sheets

Two laver sheets having a width and a length of 190 mm × 210 mm (area: 190 mm × 210 mm = 39,900 mm²) were prepared and 5 g of 50 brix sugar solution was evenly applied to the laver sheet. The application of the sugar solution was performed by applying the sugar solution to a brush and then brushing the sugar solution to the laver sheets. After the sugar solution was applied to the laver sheet, a filling material containing solids was filled between the laver sheets. The solids in the filling material were spherical particles with an average particle diameter of 3 mm made from rice as a raw material.

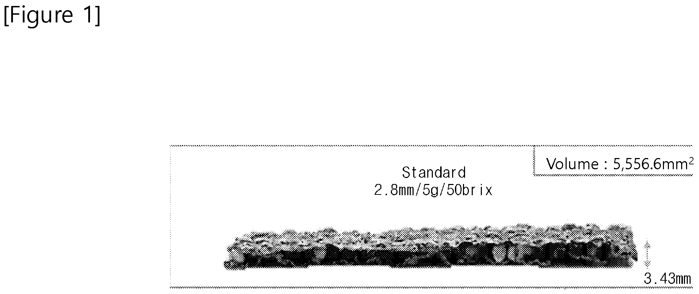

A laver snack was prepared by heat treating by grilling two laver sheets filled with the filling material including the solids using upper and lower hot plates. During the heat treatment by grilling, the grilling temperature was 180 to 190°C above and below, and the grilling was performed at a grilling distance of 2.8 mm, which was a distance between the upper and lower hot plates. The prepared laver snack was cut to a size of 18 mm × 90 mm and the cross section thereof was photographed with a digital camera and illustrated in FIG. 1.

### Experimental Example 1: Analysis of changes in characteristics of laver snack according to grilling distance

When a laver snack was prepared by adding a filling material between a laver sheet applied with a sugar solution and a laver sheet, and then heat treating by grilling the laver sheets, changes in the characteristics of the prepared laver snack were measured according to changes in grilling distances. The laver snack was prepared in the same manner as in Preparation Example 1 by varying only the grilling distance.

Two laver sheets having a width and a length of 190 mm × 210 mm (area: 190 mm × 210 mm = 39,900 mm²) were prepared. 5 g of 50 brix sugar solution was evenly applied to the laver sheet. The application of the sugar solution was performed by applying the sugar solution to a brush and then brushing the sugar solution to the laver sheet. After the sugar solution was applied to the laver sheet, a filling material including solids was filled between the laver sheets. The solids were spherical particles with an average particle diameter of 3 mm made from rice as a raw material. A laver snack was prepared by heat treating by grilling two laver sheets filled with the filling material including the solids using upper and lower hot plates. During the heat treatment by grilling, the grilling temperature was 180 to 190°C, and the heat treatment was performed by varying a grilling distance, which was a distance between the upper and lower hot plates, to 1 mm, 2.8 mm, 4.0 mm, and 5.0 mm.

The contraction rate, thickness, peak force, and peak time of the prepared laver snack were measured.

The contraction rate was calculated using the following formula. [Area before testing (39,900 mm2] - Area after testing] / [Area before testing (39,900 mm2)] X 100

The thickness of the laver snack was measured using a vernier caliper or a digital thickness gauge, and an average value of thickness measurement values obtained by measuring thicknesses of four corners and one center of a square laver snack.

The peak force and the peak time were measured using a texture analyzer (TA-XT Plus, Stable Micro Systems, England). Measurement conditions were as follows: Compression; Pre-Test Speed: 2.00 mm/sec; Test Speed: 1.00 mm/sec; Post-Test Speed: 10.00 mm/sec; Target Mode: Distance; Force: 100.0 g; Distance: 5.000 mm; Strain: 50.0 %; Trigger Type: Auto (Force).

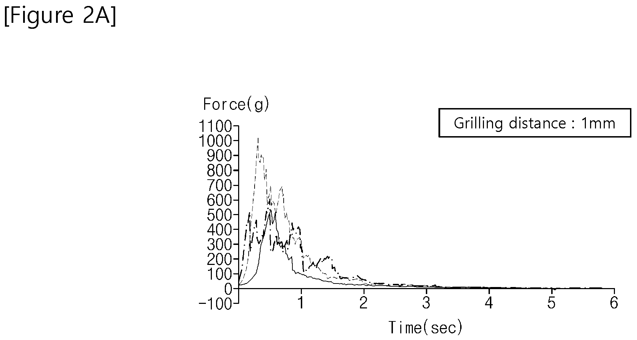

The measurement results were shown in Table 1 below. In addition, the measurement results were shown as graphs of peak force (Y-axis) - peak time (X-axis) and shown in FIGS. 2a to 2d.

**[Table 1]**

| Classification | Grilling distance | | | |
|---|---|---|---|---|
| | 1 mm | 2.8 mm | 4.0 mm | 5.0 mm |
| Width(mm) | 185 | 155 | 153 | 152 |
| Length(mm) | 197 | 168 | 165 | 163 |
| Area (mm²) | 36445 | 26040 | 25245 | 24776 |
| Contraction rate(%) | 0.00 | 28.55 | 30.73 | 32.02 |
| Thickness(mm) | 2.10 | 3.43 | 4.28 | 4.45 |
| Peak force(g) | 1025.972 | 1091.379 | 545.127 | 1265.241 |
| Peak time (sec) | 2.058 sec (force 28.956g) | 3.662 sec (force 26.933g) | 5.112 sec (force 26.933g) | 5.184 sec (force 29.523g) |

As shown in Table 1, when the grilling distance was 1 mm, the peak force was as high as 1000 or more, and the peak time was generally as short as 2 seconds. This is presumed to be because the grilling distance is narrow, which results in insufficient puffing and thus increases the density of the laver snack.

In FIG. 2A, the measurement results of the laver snack prepared with a grilling distance of 1 mm with TA analyzer were illustrated as a graph of peak force (Y-axis) - peak time (X-axis). According to the graph in FIG. 2A, it can be seen that a stabbing or breaking sharp texture is implemented.

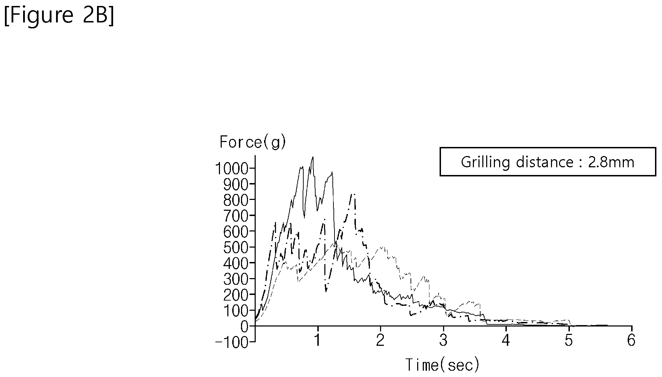

On the other hand, when the grilling distance is 2.8 mm or more, the peak time significantly increases to 3.662 sec, and even if a peak force is developed similarly to that in the case where the grilling distance of 1 mm, the peak appears for a sufficient period of time, so that the burden in the mouth is reduced when eating and a crunchy texture may be felt (FIG. 2B).

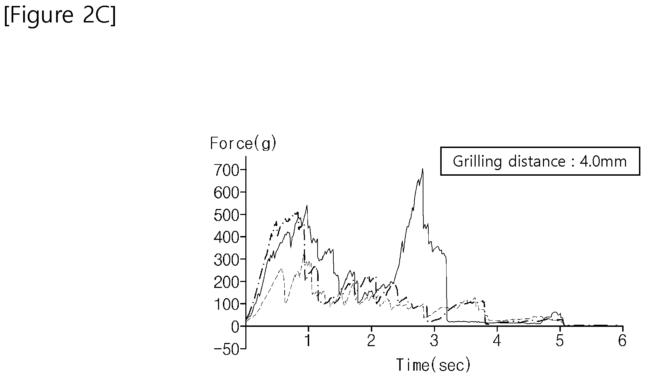

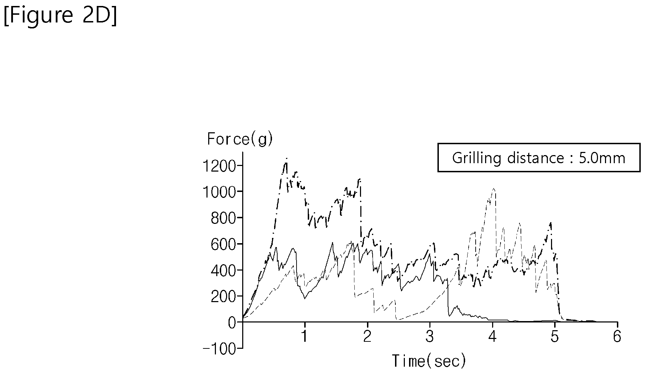

When the grilling distance was 4.0 mm and 5.0 mm, the density of the laver snack was decreased and the peak force was partially decreased, and the peak time also became longer, so that crunchy and crispy textures in the mouth may be felt (FIGS. 2C and 2D).

### Experimental Example 2: Analysis of changes in characteristics of laver snack according to Brix of sugar solution

When preparing a laver snack by adding a filling material between a laver sheet applied with a sugar solution and a laver sheet, and then heat treating by grilling the laver sheet, changes in characteristics of the prepared laver snack were measured according to a change in Brix of the sugar solution applied to the laver sheet.

Two laver sheets having a width and a length of 190 mm × 210 mm (area: 190 mm × 210 mm = 39,900 mm²) were prepared. The weight of the sugar solution applied to the laver sheet was the same as 5 g, and the sugar solution was evenly applied to the laver sheet by varying only the Brix of the sugar solution to 70 brix, 60 brix, 50 brix, and 45 brix. The application of the sugar solution was performed by applying the sugar solution to a brush and then brushing the sugar solution to the laver sheet.

A filling material including solids was filled between a laver sheet applied with the sugar solution and a laver sheet. The solids were spherical particles with an average particle diameter of 3 mm made from rice as a raw material, the laver snack was prepared by heat treating by grilling two laver sheets filled with the filling material including the solids using upper and lower hot plates. During the heat treatment by grilling, the grilling temperature was 180 to 190°C above and below, and the heat treatment was performed at a grilling distance of 2.8 mm, which was a distance between the upper and lower hot plates.

The contraction rate, thickness, peak force, and peak time of the prepared laver snack were measured.

The contraction rate was calculated using the following formula. [Area before testing (39,900 mm2] - Area after testing] / [Area before testing (39,900 mm2)] X 100

The thickness of the laver snack was measured using a vernier caliper or a digital thickness gauge, which is an average value of thickness measurement values obtained by measuring thicknesses of four corners and one center of a square laver snack.

The peak force and the peak time were measured using a texture analyzer (TA-XT Plus, Stable Micro Systems, England). Measurement conditions are as follows: Compression; Pre-Test Speed: 2.00 mm/sec; Test Speed: 1.00 mm/sec; Post-Test Speed: 10.00 mm/sec; Target Mode: Distance; Force: 100.0 g; Distance: 5.000 mm; Strain: 50.0 %; Trigger Type: Auto (Force).

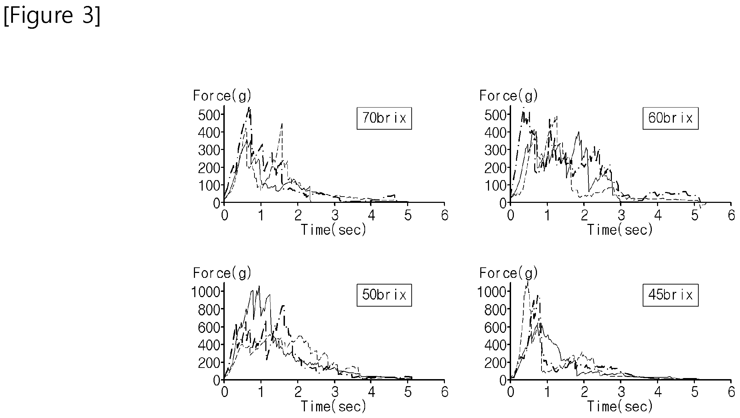

The measurement result was shown in Table 2 below. In addition, the measurement result was illustrated as graphs of peak force (Y-axis) - peak time (X-axis), and was shown in FIG. 3.

**[Table 2]**

| Brix of sugar solution | 70 brix | 60 brix | 50 brix | 45 brix |
|---|---|---|---|---|
| Width (mm) | 187 | 165 | 155 | 148 |
| Length (mm) | 198 | 183 | 168 | 165 |
| Area (mm²) | 37026 | 30195 | 26040 | 24420 |
| Contraction rate(%) | 7.20 | 24.32 | 34.74 | 38.80 |
| Thickness (mm) | 2.80 | 3.28 | 3.43 | 3.35 |
| Peak force(g) | 692.346 | 547.473 | 1091.379 | 1291.415 |
| Peak time(sec) | 2.325 sec (force 25.321g) | 2.939 sec (force 29.395g) | 3.662 sec (force 26.933g) | 3.225 sec (force 2.932g) |

As shown in Table 2, as the Brix of the applied sugar solution was higher, the thickness of the laver snack was relatively thinner, and the peak time was shorter. On the contrary, as the Brix of the sugar solution decreased, the thickness of the laver snack became thicker and the peak time tended to increase. This appears to be because the moisture in the sugar solution instantly expands into gas during grilling, and at this time, the amount of moisture in the sugar solution affected the degree of puffing. It was found that if the amount of moisture in the sugar solution is large, the amount of gas contributing to puffing during the grilling heat treatment process increases, increasing both the thickness and the peak time. Accordingly, referring to the graphs illustrated in FIG. 3, as the Brix in the sugar solution decreases, the thickness of the laver snack becomes thicker and the peak time becomes longer, giving a texture similar to a snack.

### Experimental Example 3: Analysis of changes in characteristics of laver snack according to weight of sugar solution

When preparing a laver snack by adding a filling material between a laver sheet applied with a sugar solution and a laver sheet, and then heat treating by grilling the applied laver sheet, changes in characteristics of the prepared laver snack were measured according to changes in the weight of the sugar solution applied to the laver sheet.

Two laver sheets having a width and a length of 190 mm × 210 mm (area: 190 mm × 210 mm = 39,900 mm²) were prepared. The Brix of the sugar solution applied to the laver sheet was the same as 50 brix, and the sugar solution was prepared by varying only the weight to 5 g, 3 g, and 1 g, respectively, and evenly applied to the laver sheet. The application of the sugar solution was performed by applying the sugar solution to a brush and then brushing the sugar solution to the laver sheet.

A filling material containing solids was filled between the laver sheets. The solids were spherical particles with an average particle diameter of 3 mm made from rice as a raw material.

A laver snack was prepared by heat treating by grilling two laver sheets filled with the filling material containing the solids using upper and lower hot plates. During the heat treatment by grilling, the grilling temperature was 180 to 190°C above and below, and the heat treatment was performed at a grilling distance of 2.8 mm, which was a distance between the upper and lower hot plates.

The contraction rate, thickness, peak force, and peak time of the prepared laver snack were measured.

The contraction rate was calculated using the following formula. [Area before testing (39,900 mm2] - Area after testing] / [Area before testing (39,900 mm2)] X 100

The thickness of the laver snack was measured using a vernier caliper or a digital thickness gauge, which was an average value of thickness measurement values obtained by measuring thicknesses of four corners and one center of a square laver snack.

The peak force and the peak time were measured using a texture analyzer (TA-XT Plus, Stable Micro Systems, England). Measurement conditions were as follows: Compression; Pre-Test Speed: 2.00 mm/sec; Test Speed: 1.00 mm/sec; Post-Test Speed: 10.00 mm/sec; Target Mode: Distance; Force: 100.0 g; Distance: 5.000 mm; Strain: 50.0 %; Trigger Type: Auto (Force).

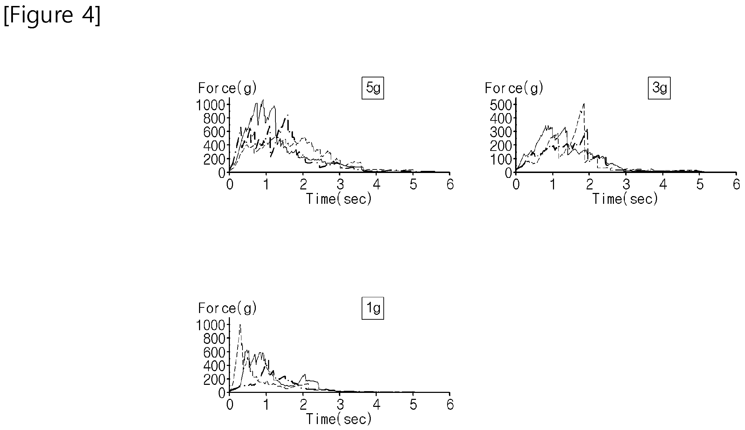

The measurement results were illustrated in Table 3 below. In addition, the measurement result was illustrated as graphs of peak force (Y-axis) - peak time (X-axis), and was shown in FIG. 4.

**[Table 3]**

| Weight of sugar solution | 5 g | 3 g | 1 g |
|---|---|---|---|
| Width (mm) | 155 | 177 | 186 |
| Length (mm) | 168 | 184 | 206 |
| Area (mm²) | 26400 | 32568 | 38316 |
| Contraction rate(%) | 37.74 | 18.38 | 3.97 |
| Thickness (mm) | 3.43 | 2.70 | 2.30 |
| Peak force(g) | 1091.379 | 571.748 | 1009.551 |
| Peak time(sec) | 3.662 sec (force 26.933g) | 2.753 sec (force 25.571g) | 2.421 sec (force 28.395g) |

As shown in Table 3, it was confirmed that the contraction rate, thickness, and peak time of the laver snack were constantly affected by changes in the weight of the applied sugar solution, and were associated with each other. Since a large amount of sugar solution in the laver snack means a large amount of moisture that may contribute to puffing, it could be seen that as the thickness of the laver snack increases, the peak time also increases, giving a relatively crunchy texture. On the contrary, it could be seen that as the weight of the sugar solution decreased, the thickness of the laver snack became thinner and the peak time became shorter. Accordingly, it was found that the weight of the sugar solution was also a factor in determining the texture of the laver snack by affecting the puffing power during the heat treatment by grilling.

### Experimental Example 4: Observation of cross section of laver snack according to grilling distance, weight of sugar solution, and Brix of sugar solution

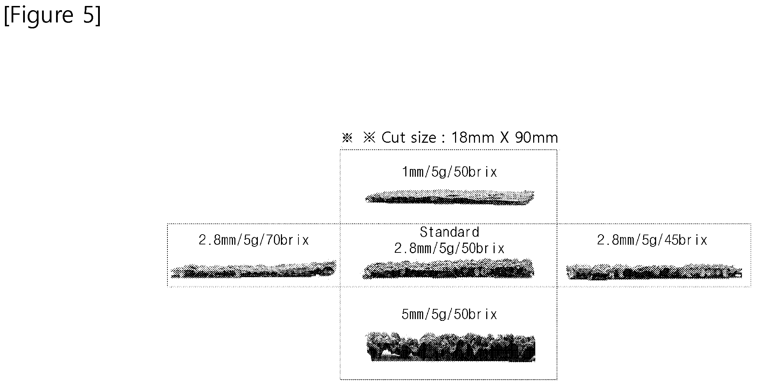

In Experimental Examples 1 to 3, the cross section of the laver snack was photographed with a digital camera in the prepared laver snack by changing the grilling distance, the Brix of the sugar solution, and the weight of the sugar solution (FIG. 5). The size of the laver was measured for each experimental condition, the approximate volume was calculated, and then the degree of puffing was compared. As a result of the comparison, the larger the grilling distance and the lower the Brix of the sugar solution, the thicker the thickness of the laver itself and the rougher the wave on the surface. At the same time, as the volume increased, a cross section described above was formed, and a space was formed inside the laver snack, giving a crunchier texture.

### Experimental Example 5: Analysis of differences in thickness and texture preference depending on moisture weight in sugar solution applied to laver

Differences in thickness shown when the laver snack was puffed and contracted were compared according to the content of moisture (moisture weight) in the sugar solution, and the resulting sensory preference was illustrated on a 5-point scale (n = 10).

Table 4 below illustrated the results of measuring the thickness and sensory preference according to a change in Brix of the sugar solution while maintaining the weight of the sugar solution at 5 g.

**[Table 4]**

| Brix | 70 brix | 60 brix | 50 brix | 45 brix |
|---|---|---|---|---|
| Required moisture amount(g)/per sand* | 1.5 | 2 | 2.5 | 2.75 |
| Thickness (mm) | 2.8 | 3.28 | 3.43 | 3.35 |
| Sensory preference (5-point scale) | 3.25 | 4.3 | 4.8 | 4.7 |

| | | | | |
|---|---|---|---|---|
| *Sand is a laver snack made with two laver sheets overlapped. | | | | |

Table 5 below illustrated the results of measuring the thickness and sensory preference by changing the weight of the sugar solution to 1 g, 3 g, and 5 g while maintaining the Brix of the sugar solution at 50 brix.

**[Table 5]**

| Weight of sugar solution | 5 g | 3 g | 1 g |
|---|---|---|---|
| Required moisture amount(g)/per sand* | 2.5 | 1.5 | 0.5 |
| Thickness (mm) | 3.43 | 2.7 | 2.3 |
| Sensory preference (5-point scale) | 4.8 | 3.85 | 2.8 |

| | | | |
|---|---|---|---|
| *Sand is a laver snack made with two laver sheets overlapped. | | | |

As illustrated in Tables 4 and 5, the optimal weight of water contained in the sugar solution evenly applied to two laver sheets with a size of 190 × 210 mm was 2.5 g, and the range of the weight of moisture contained in the sugar solution capable of giving a texture similar to that in the case where the required moisture amount per the sand was 2.5 g could be 1.5 g or more.

The above experimental results are summarized as follows.

As a result of testing according to changes in the grilling distance, when the grilling distance was set to 1 mm, 2.8 mm, 4 mm, and 5 mm, since the thickness of the laver snack was 2.1 mm, 3.425 mm, 4.275 mm, and 4.45 mm, respectively, it could be found that a grilling distance of a certain distance or more is necessary for a crunchy texture. In addition, as a result of testing according to changes in Brix of the sugar solution, at 70 brix, the laver snack is not fully puffed due to less moisture in the sugar solution even if the grilling distance is sufficient, and thus the thickness of the product becomes thinner. Accordingly, the peak time is shortened and a less crunchy and more breakable texture is developed. As a result of testing according to changes in the weight of the sugar solution, it was found that when the weight of the sugar solution is 3 g or less, the content of moisture in the sugar solution decreases, resulting in less puffing, and thus the thickness of the laver snack becomes thinner, and the crunchiness of the texture decreases as in the testing according to change in Brix. Therefore, an important factor in the texture of the laver to achieve the most ideal texture is that the moisture in the sugar solution, which is the source of gas that can increase the thickness by puffing and waving the inside of the laver, needs to be more than a predetermined content; the weight of the sugar solution needs to be more than a predetermined weight to have a good texture; and a grilling distance, which is a physical space where the laver can have a puffing and wave structure, needs to be more than a predetermined amount.

Hereinabove, representative embodiments of the present application have been exemplarily described, but the scope of the present application is not limited to the specific embodiments as described above, and can be changed appropriately by those skilled in the art within the scope described in the claims of the present application.

## Claims

1. A laver sheet applied with a sugar solution, the laver sheet having:
the thickness of 2 mm or more,
the peak force of 500 or more,
the peak time of 2.5 seconds or more, and
a wave shape.

2. The laver sheet of claim 1, wherein the Brix of the sugar solution is 40 to 80 brix.

3. The laver sheet of claim 1, wherein the sugar solution is applied in a weight of 0.5 to 5.5 g per area of 39,900 mm² of the laver.

4. The laver sheet of claim 1, wherein the laver sheet is obtained by applying the sugar solution on a sheet-shaped laver and then heat treating by grilling the applied laver sheet.

5. The laver sheet of claim 1, wherein the wave shape has 1 to 10 ridges per 10 mm length.

6. A laver snack, comprising:
(a) two laver sheets applied with a sugar solution; and
(b) a filling material containing solids between two laver sheets applied with the sugar solution,
wherein the laver snack has the thickness of 2 mm or more,
the peak force of 500 or more,
the peak time of 2.5 seconds or more, and
a wave shape.

7. The laver snack of claim 6, wherein the Brix of the sugar solution is 40 to 80 brix.

8. The laver snack of claim 6, wherein the sugar solution is applied in a weight of 0.5 to 5.5 g per area of 39,900 mm² of one laver sheet.

9. The laver snack of claim 6, wherein the solids comprise grains, nuts, and seafoods.

10. The laver snack of claim 6, wherein the laver snack is obtained by adding a filling material containing solids between two or more laver sheets applied with the sugar solution, and then heat treating by grilling the applied laver sheet.

11. The laver snack of claim 6, wherein the wave shape has 1 to 10 ridges per 10 mm length of the laver snack.

12. A preparation method of a laver snack, comprising:
adding a filling material containing solids between two laver sheets applied with a sugar solution; and
heat treating by grilling the two laver sheets including the filling material,
wherein the grilling distance is 1.5 to 5 mm.

13. The preparation method of the laver snack of claim 12, wherein the Brix of the sugar solution is 40 to 80 brix.

14. The preparation method of the laver snack of claim 12, wherein the sugar solution is applied in a weight of 0.5 to 5.5 g per area of 39,900 mm² of one laver sheet.

15. The preparation method of the laver snack of claim 12, wherein the content of moisture in the sugar solution applied to one laver sheet having an area of 39,900 mm² is 0.25 to 1.38 g.

16. The preparation method of the laver snack of claim 12, wherein the solids contained in the filling material comprise grains, nuts, or seafoods.

17. The preparation method of the laver snack of claim 16, wherein the filling material further contains a sugar solution.

18. The preparation method of the laver snack of claim 12, wherein the contraction rate of the laver snack after heat treating by grilling is 17% to 39%.

19. The preparation method of the laver snack of claim 12, wherein the thickness of the laver snack is 2 mm or more.
